# EUROPÄISCHE PATENTSCHRIFT

(11) **EP 4 110 983 B1**
(45) Veröffentlichungstag und Bekanntmachung des Hinweises auf die Patenterteilung: **03.07.2024**
(21) Anmeldenummer: 21706602.6
(22) Anmeldetag: 24.02.2021
(51) Int. Cl.: D04H 5/02, D04H 5/03

(54) **VERFAHREN SOWIE ANLAGE ZUR HERSTELLUNG EINES VERBUNDVLIESSTOFFS**
PROCESS AND APPARATUS FOR PRODUCING A COMPOSITE NONWOVEN
PROCÉDÉ ET APPAREIL PERMETTANT DE PRODUIRE UN NON-TISSÉ COMPOSITE

(30) Priorität: 24.02.2020 EP 20159094
(43) Veröffentlichungstag der Anmeldung: 04.01.2023
(60) Teilanmeldung: 24177836.4
(73) Patentinhaber: Lenzing Aktiengesellschaft, 4860 Lenzing (AT)
(72) Erfinder: SAGERER-FORIC, Ibrahim, 4840 Vöcklabruck (AT); EINZMANN, Mirko, 4600 Wels (AT); GREGORICH, Katharina, 4813 Altmünster (AT); GOLDHALM, Gisela, 3363 Neufurth (AT)
(74) Vertreter: Schwarz & Partner Patentanwälte GmbH
(86) Internationale Anmeldenummer: PCT/EP2021/054498
(87) Internationale Veröffentlichungsnummer: WO 2021/170610

(56) Entgegenhaltungen:
- EP-A1- 3 254 655
- EP-A2- 1 445 366
- WO-A1-2018/184048
- WO-A2-2012/090130
- US-A- 5 284 703
- US-B2- 7 432 219

## Beschreibung

Die vorliegende Erfindung betrifft ein Verfahren zur Herstellung eines Verbundvliesstoffs, bei dem eine cellulosische Spinnmasse durch eine Vielzahl von Düsenlöchern zumindest einer Spinndüse zu Filamenten extrudiert wird und die Filamente jeweils in Extrusionsrichtung verstreckt werden, wobei die Filamente zur Bildung eines Spinnvlieses auf einer perforierten Fördereinrichtung in Wirrlage abgelegt werden, und bei dem zur Bildung des Verbundvliesstoffs zu dem Spinnvlies Kurzfasern hinzugefügt werden.

Weiters betrifft die Erfindung eine Anlage zur Herstellung eines Verbundvliesstoffs.

### Stand der Technik

Aus dem Stand der Technik ist die Herstellung von Spinnvliesen bzw. Vliesstoffen einerseits nach dem Spunbond- und andererseits nach dem Meltblown-Verfahren bekannt. Beim Spunbond-Verfahren (bspw. GB 2 114 052 A oder EP 3 088 585 A1) werden die Filamente durch eine Düse extrudiert und durch eine darunterliegende Verstreckungseinheit abgezogen und verstreckt. Beim Meltblown-Verfahren dagegen (bspw. US 5,080,569 A, US 4,380,570 A oder US 5,695,377 A) werden die extrudierten Filamente bereits beim Austritt aus der Düse von heißer, schneller Prozessluft mitgerissen und verstreckt. Bei beiden Technologien werden die Filamente auf einer Ablagefläche, beispielsweise einem perforierten Förderband, in Wirrlage zu einem Vliesstoff abgelegt, zu Nachbearbeitungsschritten transportiert und schließlich als Vliesrollen aufgewickelt.

Die aus Kunststoffschmelzen hergestellten Spinnvliese nach den zuvor genannten Verfahren können mit sehr geringen Flächengewichten im Bereich von bis zu 10 g/m² und hohen Zugfestigkeiten hergestellt werden. Solche Vliesstoffe weisen allerdings in der Regel zu geringe Absorptionseigenschaften für Anwendungen, in denen die Saugfähigkeit eine Rolle spielt, auf. Zudem sind derartige Vliesstoffe wenig bis gar nicht biologisch abbaubar.

Im Gegensatz dazu sind aus dem Stand der Technik (US 4,755,421, WO 2015/000687, US 4,166,001) Nasslegeverfahren zur Herstellung von Vliesstoffen mit hoher Absorptionsfähigkeit bekannt, in welchen eine niederkonzentrierte Zellstoffsuspension hergestellt und auf einem Förderband aufgetragen wird. Derartige Vliesstoffe leiden allerdings an einer geringen Zug- und Abriebfestigkeit. Die mechanischen Eigenschaften dieser Produkte können jedoch teilweise durch den Einsatz synthetischer Bindemittel und Klebstoffe verbessert werden, was sich wiederum nachteilig auf die biologische Abbaubarkeit auswirkt.

Ein großer Markt für Vliesstoffe besteht in Anwendungen im Bereich von Wischtüchern für Medizin, Hygiene, Kosmetik, Industrie oder Haushalt. Für Wischtücher, im Speziellen für feuchte Wischtücher, gelten allerdings hohe Anforderungen hinsichtlich Zugfestigkeit und Absorptionsvermögen, um ein zuverlässiges Produkt zu erhalten. Um die nassgelegten Vliesstoffe mechanisch zu verstärken, werden - wie in US 2004/0013859 beschrieben - synthetische Bindemittel sowie Kurzschnittfasern auf der Basis von Polyethylen, Polypropylen oder Polyester den zu verarbeitenden Suspensionen beigemischt. Mit solchen Verfahren hergestellte Vliesstoffe weisen aufgrund deren Gehalt an Synthesefasern eine schlechte bzw. nicht vollständige biologische Abbaubarkeit auf.

Um die mechanische Stabilität von Kunststoff-Spinnvliesen mit den Absorptionseigenschaften von Zellstoff zu kombinieren, wurde in EP 0 333 211 ein Verfahren beschrieben, in welchem ein synthetisches, insbesondere Polyester- oder Polyolefin-basiertes, Meltblown-Vliesprodukt unter anderem hydrodynamisch mit cellulosischen Stapelfasern oder mit einer Lage nassgelegten Zellstoffs verbunden wird. Weiterentwicklungen dieses Verfahrens (US 5,284,703, US 5,587,225, US 2009/0233049) erlauben die Herstellung eines größeren Produktspektrums, insbesondere die Herstellung eines günstigeren Massenprodukts für den Wischtuchmarkt. So kann in diesen Verfahren beispielsweise durch Kombination eines modifizierten Airlay-Verfahrens mit der Meltblown-Technologie ein saugfähiges Vliesprodukt hergestellt werden, in welchem Zellstofffasern homogen über eine synthetische Polyolefin-Fasermatrix verteilt vorliegen. Auch solche Produkte leiden unter ihrer nicht vollständigen biologischen Abbaubarkeit.

Aus heutiger, ökologischer Sicht ist sowohl die Kombination von erdölbasierten Stapelfasern als auch von erdölbasierten Spinnvliesen, wie z.B. aus Polyester oder Polypropylen, mit Zellstoff bedenklich. Speziell für den Massenmarkt hergestellte Produkte, welche erdölbasierte Fasern oder Filamente enthalten, sind weder vollständig biologisch abbaubar noch gibt es geeignete Recyclingmethoden hierfür. Verbundvliesstoffe aus Kunststoff und Zellstoff werden weltweit verkauft und landen nach ihrem einmaligen Gebrauch auf Mülldeponien, in den Flüssen oder in den Weltmeeren. Dabei entsteht Mikroplastik, welches in die Nahrungskette aufgenommen wird und dessen Auswirkungen auf das Leben noch nicht in vollem Ausmaß abzusehen sind. Aber auch schon zuvor in der Gebrauchsphase dieser Produkte entstehen signifikante Mengen an Mikroplastik - wie Scheuertests und deren anschließende mikroskopische Untersuchung mit deutlichen Anzeichen von Materialabtrag und Faserbruch zeigen.

So sind aus dem Stand der Technik (WO 2012/090130) auch Verfahren bekannt, um Vliesstoffe ohne Kunststoffanteil und ohne chemische Bindemittel zu erzeugen. Dabei wird eine Lage nassgelegten Zellstoffs mit einer zweiten Vliesstofflage regenerierter Cellulosefasern oder Cellulosefilamenten mittels einer Wasserstrahlverfestigung verbunden. Der beschriebene Prozess ist aber aufgrund der Prozessführung sehr aufwändig, da die Spinnvliesrollen abgewickelt und über Umlenkungen zu der bereits erzeugten, nassgelegten Zellstofflage geführt werden müssen. Es wird darauf verwiesen, dass das cellulosische Spinnvlies wie mit herkömmlichen Spunbondverfahren auch kontinuierlich hergestellt und über Umlenkrollen mit der nassgelegten Zellstofflage verbunden und hydraulisch verfestigt werden kann, doch wie die Herstellung der cellulosischen Spinnvlieslage durchgeführt werden soll und wie eine Vorrichtung dafür aussehen soll, wird nicht beschrieben. Ebenfalls nicht adressiert wird die im zuvor zitierten Stand der Technik (EP 0 333 211, US 5,284,703, US 5,587,225) ausdrücklich beschriebene und als erfolgskritisch dargestellte Material- und Bindungsdichte der Spinnvlieskomponente, deren inkorrekte Einstellung zu einem unzureichenden Eindringen bzw. einer schwachen Verankerung der Zellstoffasern in dem vorgelegten Spinnvlies und somit zu einem schlechten Lagenzusammenhalt führt.

Ein weiteres Herstellungsverfahren, in dem ein kunststoffbasiertes Spunbond-Verfahren direkt mit einem Nasslegeverfahren kombiniert wird, ist aus der US 7,432,219 bekannt. Allerdings handelt es sich auch hier um eine biologisch nicht abbaubare und somit nicht nachhaltige Lösung.

Aus der US 4,523,350 ist es weiters bekannt, dass cellulosische Stapelfasern über eine Karde zu einem Faserflor und mit einer Verfestigungsanlage zu einem Vliesstoff zu verarbeitet werden können. Solche Verfahren bzw. Anlagen sind den Spunbond- und Wetlay-Anlagen allerdings aufgrund der geringeren Produktionsgeschwindigkeiten hinsichtlich Produktionskapazitäten deutlich unterlegen. Cellulosische Stapelfasern werden bereits bei ihrer Fertigung getrocknet und in Ballen gepresst, in der nachfolgenden Vliesherstellung mechanisch geöffnet, durch die Wasserstrahlverfestigung wieder nass gemacht und anschließend als Vlies wieder getrocknet. Aus der Sicht der globalen Energieeinsparung ist ein solcher Prozess zu hinterfragen. Um die Rohstoffkosten sowie die Trocknungskosten zu senken und somit wettbewerbsfähige Vliesstoffprodukte für den Massenmarkt wie Baby- oder Hygiene-Wischtücher erzeugen zu können, werden kardierte Vliese üblicherweise aus einer Mischung von Polyester- und Viskosefasern hergestellt, und tragen durch den Anteil an erdölbasierenden Fasern wiederum wegen ihrer mangelnden biologischen Abbaubarkeit zur globalen Mikroplastikproblematik bei.

Auch ist es aus dem Stand der Technik bekannt, cellulosische Spinnvliese gemäß der Spundbond-Technologie (bspw. US 8,366,988 A) und gemäß Meltblown-Technologie (bspw. US 6,358,461 A und US 6,306,334 A) herzustellen. Dabei wird eine Lyocell-Spinnmasse entsprechend den bekannten Spundbond- oder Meltblownverfahren extrudiert und verstreckt. Vor der Ablage zu einem Vlies werden die Filamente allerdings noch zusätzlich mit einem Koagulationsmittel in Kontakt gebracht, um die Zellulose zu regenerieren und formstabile Filamente zu erzeugen. Die nassen Filamente werden schließlich in Wirrlage als Vliesstoff abgelegt. Diese Verfahren haben allerdings nur wenig mit der thermoplastischen Spinnvliesherstellung nach den klassischen Spundbond- oder Meltblown-Verfahren, wie eingangs beschrieben, zu tun. Da es sich bei der Lyocell-Spinnmasse um eine Lösung mit 7-14% Cellulosegehalt handelt, wird neben der faserbildenden Cellulose auch sehr viel mehr Lösungsmittel bei der Spinnvliesherstellung extrudiert, welches in einer nachfolgenden Wäsche aus dem Vlies extrahiert und zurückgewonnen wird. Die spezifischen Druckluftverbräuche aller Lyocell-basierten Spinnvliesverfahren sind wegen des stark reduzierten Feststoffgehaltes deutlich höher als bei Spinnvliesverfahren, welche auf thermoplastischen Schmelzen beruhen: Um eine dem thermoplastischen Spunbond-Verfahren vergleichbare Produktivität zu erreichen, müssen im Falle von Lyocell-Spinnvliesen deutlich größere Massenströme bewegt und mit mehr Luft und Energie zu einem Spinnvlies verarbeitet werden. Wegen des erhöhten Energieverbrauches ist der Einsatz solcher Produkte wegen ihrer sehr feinen Faserdurchmesser zwar für Spezialanwendungen im Bereich der Filtration, Hygiene oder auch für hochpreisige Wischtücher geeignet, doch kann damit der Bedarf eines günstigen, rein cellulosischen und biologisch abbaubaren Vliesstoffes für Massenmärkte wie beispielsweise Babywischtücher, Haushaltswischtücher, Hygiene- und Industrieanwendungen kaum befriedigt werden.

WO 2018/18408 offenbart die Herstellung eines Verbundvliesstoffs, bei der Kurzfasern zu einem Spinnvlies umfassend im Wesentlichen endlose regenerierte cellulosiche Filamente hinzugefügt werden.

Der Stand der Technik bietet somit keine zufriedenstellende Lösung, um einen biologisch abbaubaren, günstigen Vliesstoff mit guten Zugfestigkeiten, Absorptions- und Reinigungseigenschaften sowie dem Anwendungszweck angepasster Haptik herstellen zu können.

### Offenbarung der Erfindung

Die vorliegende Erfindung hat sich daher die Aufgabe gestellt, einen vollständig biologisch abbaubaren Verbundvliesstoff der eingangs erwähnten Art bereitzustellen, welcher eine hohe Stabilität und Zugfestigkeit sowie gute Absorptionseigenschaften und haptische Eigenschaften aufweist und zudem kostengünstig herstellbar ist.

Die Erfindung löst die gestellte Aufgabe dadurch, dass der Verbundvliesstoff zumindest einen Vermischungsbereich aufweist, in welchem die Filamente des Spinnvlieses und die Kurzfasern physikalisch miteinander verbunden vorliegen.

Es hat sich überraschend herausgestellt, dass durch das Vorsehen eines Vermischungsbereichs in dem Verbundvliesstoff eine besonders zuverlässige und dauerhafte Verbindung zwischen dem Spinnvlies und den Kurzfasern geschaffen werden kann. Dies insbesondere selbst dann, wenn keine zusätzlichen Bindemittel für die Verbindung zwischen den Filamenten des Spinnvlieses und den Kurzfasern zum Einsatz kommen. In dem Vermischungsbereich liegen die Filamente des Spinnvlieses und die Kurzfasern physikalisch vermischt vor und können so insbesondere ohne das Vorliegen eines Bindemittels physikalisch miteinander verbunden sein. Die physikalische Verbindung zwischen den Filamenten des Spinnvlieses und den Kurzfasern kann zumindest teilweise durch Wasserstoffbrückenbindungen, mechanische Verhakungen oder Verschlaufungen, Reibungskräfte oder dergleichen ausgebildet sein. So kann sich zwischen dem Spinnvlies und den Kurzfasern eine stoffschlüssige Verbindung ausbilden, welche insbesondere nicht zerstörungsfrei wieder gelöst werden kann.

Die physikalische Vermischung zwischen Spinnvlies und Kurzfasern kann beispielsweise durch Beaufschlagung des Spinnvlieses im noch nie getrockneten Zustand mit einer Suspension aus den Kurzfasern erfolgen, wodurch eine gegenseitige Durchdringung der Filamente des Spinnvlieses und der Kurzfasern ermöglicht wird und so der Vermischungsbereich geschaffen wird.

Der Verbundvliesstoff ist somit ein rein biobasierter und vollständig biologisch abbaubarer Vliesstoff. Die Erfindung kann somit einen Beitrag zur Vermeidung einer Verschmutzung der Umwelt beitragen. Zudem weist der Verbundvliesstoff durch die physikalische Vermischung bzw. Verbindung zwischen Spinnvlies und Kurzfasern hohe Festigkeitswerte auf, da das Spinnvlies - mit üblicherweise sehr hohen Festigkeitswerten - die Schicht aus Kurzfasern stabilisiert. Diese Stabilisierung kann zudem überraschenderweise ohne negative Beeinträchtigung der Haptik des Verbundvliesstoffes erfolgen. Während Bindemittel aufweisende Verbundvliesstoffe üblicherweise eine hohe Steifigkeit aufweisen, kann mit dem erfindungsgemäßen Verbundvliesstoff ein gegenüber dem Stand der Technik weicherer und biegsamerer Verbundvliesstoff erhalten werden. Der rein biobasierte und vollständig biologisch abbaubare Verbundvliesstoff weist zudem eine hohe Absorptionsfähigkeit auf und kann ressourcenschonend hergestellt werden.

Unter biobasierten Fasern werden im Sinne der vorliegenden Erfindung natürliche Fasern sowie biobasierte Kunststoff-Fasern bezeichnet, welche auf Basis nachwachsender Rohstoffe erzeugt werden. Davon zu unterscheiden sind lediglich biologisch abbaubare Kunststoff-Fasern, die keine biogene Herkunft aufweisen und aus erdölbasierten Rohstoffen hergestellt sein können. Der Begriff "biobasierte Fasern" im Rahmen dieser Erfindung schließt insbesondere das Vorhandensein von erdölbasierten Anteilen in diesen Fasern aus.

Unter biologisch abbaubaren Fasern im Rahmen dieser Erfindung werden, im Falle von Kunststoff-Fasern, solche Fasern verstanden, die gemäß den Richtlinien für bioabbaubare Kunststoffe in der europäischen Norm EN 13432 als vollständig kompostierbar gelten.

Sind die Kurzfasern cellulosische Kurzfasern, so kann der erfindungsgemäße Verbundvliesstoff im absolut trockenen ("atro") Zustand, d.h. frei von Wasser, je nach verwendeter cellulosischer Kurzfaser einen Gehalt an Cellulose von zumindest 93 Gew.-% aufweisen. Den Restgehalt können dabei in Zellstoffen natürlich vorkommende Stoffe, wie etwa Lignine, sowie unvermeidbare Verunreinigungen bilden. Ein solcher Verbundvliesstoff weist eine sehr gute und vollständige biologische Abbaubarkeit auf. Bevorzugt kann der absolut trockene Verbundvliesstoff einen Gehalt an Cellulose von zumindest 95 Gew.-%, besonders bevorzugt von zumindest 97 Gew.-%, aufweisen.

Vorteilhaft kann der Verbundvliesstoff zwischen 10 Gew.-% und 99 Gew an cellulosischen Filamenten des Spinnvlieses und zwischen 1 Gew.-% und 90 Gew.-% an Kurzfasern aufweisen. Durch die erfindungsgemäße Zusammensetzung kann insbesondere ein Verbundvliesstoff mit gutem Zusammenhalt zwischen Filamenten und Kurzfasern bzw. hoher Festigkeit gewährleistet werden. Bevorzugt weist der Verbundvliesstoff dabei zwischen 15 Gew.-% und 95 Gew.-%, besonders bevorzugt zwischen 20 Gew.-% und 90 Gew.-%, an cellulosischen Filamenten und zwischen 5 Gew.-% und 85 Gew.-%, besonders bevorzugt zwischen 10 Gew.-% und 80 Gew.-%, an Kurzfasern auf.

Ein Verbundvliesstoff mit einer besonders vorteilhaften Haptik, hoher Weichheit und Flexibilität kann bereitgestellt werden, wenn der Verbundvliesstoff im Wesentlichen frei von in Holz nicht natürlich vorkommenden, insbesondere synthetischen, Bindemitteln ist. Solche erfindungsgemäßen, von Bindemitteln freien Verbundvliesstoffe können sich für eine Vielzahl an Applikationen, wie etwa hautfreundliche Hygieneprodukte, besonders gut eignen. Bindemittel aufweisende Verbundvliesstoffe können dagegen eine sehr hohe Steifigkeit und geringe Weichheit aufweisen, wodurch das Anwendungsspektrum für derartige Produkte eingeschränkt ist.

Als biobasierte biologisch abbaubare Kurzfasern können für den erfindungsgemäßen Verbundvliesstoff alle Arten cellulosischer Kurzschnittfasern, wie beispielsweise natürliche Cellulosefasern, Viscose-, Modal-, Lyocell- oder Cuprofasern, sowie chemisch modifizierte Cellulosefasern zum Einsatz kommen. Weiters eignen sich als Kurzfasern alle Arten von Fasern aus holzhaltigen Zellstoffen, wie mechanisch aufgeschlossene Zellstoffe bzw. Holzschliff, z.B. MP (mechanical pulp), TMP (thermo-mechanical pulp), CTMP (chemo-thermo-mechanical pulp), etc. Zudem können die Kurzfasern aus allen Arten von Fasern holzfreier Zellstoffe, wie chemisch aufgeschlossene Zellstoffe CP (chemical pulp) nach dem Sulfit-, Sulfat- oder anderer Verfahren, bestehen. Weiters sind als Kurzfasern auch alle Arten von Zellstoffen, die aus Holz oder anderen Pflanzen gewonnen werden, wie beispielsweise aus Gräsern, Bambus, Algen, Baumwolle bzw. Cotton Linters, Hanf, Flachs, stärkebasierte Fasern, etc., möglich. Außerdem können auch alle Arten von Zellstoffen, die aus recycelten Textilien oder Vliesen hergestellt werden, bzw. recycelte cellulosische Fasern als Kurzfasern verwendet werden.

Alternativ eignen sich als biobasierte biologisch abbaubare Kurzfasern für den erfindungsgemäßen Verbundvliesstoff ebenso Stärkefasern.

Ein besonders homogener Verbundvliesstoff kann geschaffen werden, wenn die Kurzfasern eine Länge zwischen 0,5 mm und 15 mm aufweisen. Kürzere Fasern können nicht mehr zuverlässig in dem Verbundvliesstoff gehalten werden, während längere Fasern zu inhomogenen Produkten führen können. Besonders bevorzugt liegt die Länge der Kurzfasern zwischen 1 und 12 mm.

Zudem kann der Verbundvliesstoff nicht-faserförmige funktionelle Additive, wie beispielsweise Aktivkohle, Superabsorber, partikuläre Farb- und Füllstoffe (Tonerden, gemahlene Vlies- oder Holzabfälle), etc., aufweisen. Dadurch kann der Verbundvliesstoff mit bestimmten zusätzlichen Eigenschaften, wie etwa einer hohen Wasseraufnahmefähigkeit, etc., ausgestattet werden.

Darüber hinaus kann der Vliesstoff vor oder nach der Trocknung mit produkteigenschaftsverändernden oder verarbeitungserleichternden Hilfsmitteln, wie etwa Avivagen oder Antistatika, etc., versehen werden.

Der Vliesstoff ist durch ein Verfahren gemäß einem der Ansprüche 1 bis 15 erhältlich. Wird der Vliesstoff nach einem erfindungsgemäßen Verfahren nach einem der Ansprüche 1 bis 15 hergestellt, so ergeben sich die besonderen Eigenschaften des Vliesstoffs aus den Verfahrensschritt wie im Folgenden dargestellt.

Die Erfindung hat sich außerdem die Aufgabe gestellt, ein einfaches und zuverlässiges Verfahren der eingangs erwähnten Art zur Herstellung eines Verbundvliesstoffs umfassend zumindest ein Spinnvlies, welches in Wirrlage abgelegte und im Wesentlichen endlose regenerierte cellulosische Filamente aufweist, und zumindest eine Schicht aus biobasierten biologisch abbaubaren Kurzfasern, aufweisend zumindest einen Vermischungsbereich, in welchem die Filamente des Spinnvlieses und die Kurfasern physikalisch miteinander verbunden vorliegen, bereitzustellen.

Die Aufgabe wird hinsichtlich des Verfahrens dadurch gelöst, dass die Filamente des Spinnvlieses im noch nie getrockneten Zustand mit den Kurzfasern beaufschlagt werden.

Bei dem Verfahren wird eine cellulosische Spinnmasse durch eine Vielzahl von Düsenlöchern zumindest einer Spinndüse zu Filamenten extrudiert und die Filamente jeweils in Extrusionsrichtung verstreckt, wobei die Filamente zur Bildung eines Spinnvlieses auf einer perforierten Fördereinrichtung in Wirrlage abgelegt werden. Zur Bildung des Verbundvliesstoffs werden zu dem Spinnvlies in einem weiteren Schritt Kurzfasern hinzugefügt.

Überraschenderweise hat sich gezeigt, dass ein Verbundvliesstoff mit einem Vermischungsbereich zwischen den Filamenten des Spinnvlieses und den Kurzfasern geschaffen werden kann, wenn das Spinnvlies im noch nie getrockneten Zustand, also während die Filamente des Spinnvlieses noch stark gequollen sind, mit den Kurzfasern beaufschlagt wird. Aufgrund der Weichheit und Verformbarkeit des noch nie getrockneten Spinnvlieses, sowie der schwachen Bindungen zwischen den Filamenten darin, kann es zu einer gegenseitigen Durchdringung der Filamente des Spinnvlieses und der Kurzfasern kommen, so dass der Vermischungsbereich im Verbundvliesstoff geschaffen wird. In einem nachfolgenden Trocknungsprozess können sich zwischen den Spinnvlies-Filamenten und den Kurzfasern Wasserstoffbrückenbindungen ausbilden, die den starken Zusammenhalt und die hohe Festigkeit des Verbundvliesstoffs gewährleisten, was im Gegenteil bei Verbundvliesstoffen aus thermoplastischen Vliesen und Zellstofffasern (wie beispielsweise in der WO 2012/090130 beschrieben) nicht möglich wäre.

Gemäß diesem Verfahren kann man somit einen vollständig biologisch abbaubaren Verbundvliesstoff mit Flächengewichten über 10 g/m² erhalten. Je nach Positionierung der Zufuhr der Kurzfasern sowie den Parametern einer eventuell zusätzlich vorgesehenen Wasserstrahlverfestigung, können Verbundvliesstoffe erhalten werden, in denen entweder die prozessbedingte Lagenstruktur noch erkennbar ist oder die hinzugefügten Kurzfasern homogen über die Dicke des Verbundvliesstoffs verteilt vorliegen.

Ein besonders einfaches und zuverlässiges Verfahren zur Herstellung des Verbundvliesstoffs kann bereitgestellt werden, wenn die Filamente des Spinnvlieses im noch nie getrockneten Zustand mit einer Suspension aus den Kurzfasern beaufschlagt werden. Die Kurzfasern können dabei einfach in einem wässrigen Transportmedium, insbesondere einer wässrigen Lösung bzw. Wasser, suspendiert werden und so technisch einfach auf das gebildete Spinnvlies aufgebracht werden.

Bevorzugt weist die Suspension dabei zwischen 0,01 Gew.-% und 2,00 Gew.-% an Kurzfasern auf. Auf diese Weise kann verhindert werden, dass es zu Transportproblemen mit der Suspension, insbesondere durch Verstopfung von Leitungen oder Düsen, kommt. Zudem hat sich herausgestellt, dass die Beaufschlagung des Spinnvlieses mit einer solch geringen Menge an Kurzfasern ausreicht, um die gewünschte Beladung des Spinnvlieses mit einer definierten Menge an Kurzfasern zu garantieren. Die Zuverlässigkeit des Verfahrens kann somit weiter erhöht werden.

Die Filamente des Spinnvlieses können vorteilhafterweise während einer Wäsche mit der Suspension aus Kurzfasern beaufschlagt werden. So können die Kurzfasern direkt in der Waschlösung, bzw. dem Waschwasser suspendiert sein, bzw. die Suspension als Waschlösung der Wäsche verwendet werden, wodurch die Beaufschlagung des Spinnvlieses mit den Kurzfasern in einer üblichen Spinnvlies-Waschanlage integriert werden kann. Ein besonders wirtschaftliches Verfahren kann somit bereitgestellt werden.

Alternativ oder zusätzlich zur zuvor beschriebenen Wäsche können die Filamente des Spinnvlieses auch während dem Bilden des Spinnvlieses mit der Suspension beaufschlagt werden. So kann die Suspension beispielsweise direkt auf das frisch gebildete Spinnvlies bzw. auf die frisch extrudierten Filamente aufgebracht werden.

Ein besonders einfaches und vielseitiges Verfahren zur Herstellung des Verbundvliesstoffs kann bereitgestellt werden, wenn die Filamente des Spinnvlieses im noch nie getrockneten Zustand mit einem die Kurzfasern aufweisenden Luftstrom beaufschlagt werden. Durch die Bereitstellung eines Luftstroms kann einerseits eine einfache homogene Verteilung der Kurzfasern erfolgen. Andererseits kann ein die Kurzfasern enthaltender Luftstrom an vielen Stellen des Verfahrens zuverlässig eingebracht werden, was eine besonders einfache Handhabung erlaubt.

So können die Filamente nach deren Extrusion aus der Spinndüse zur Verstreckung mit einem Verstreckungsluftstrom beaufschlagt werden. Die Kurzfasern können dabei einfach dem Verstreckungsluftstrom beigemengt werden, um so die Filamente des noch nicht getrockneten Spinnvlieses mit den Kurzfasern zu beaufschlagen. Das Verfahren kann somit technisch einfach ohne teure Modifikationen in einer bestehenden Anlage zur Herstellung von cellulosischem Spinnvlies ausgeführt werden.

Nach dem Beaufschlagen der Filamente mit den Kurzfasern kann der der Verbundvliesstoff zumindest einem weiteren Behandlungsschritt unterzogen werden. Dabei kann der Verbundvliesstoff etwa einer Wäsche unterzogen werden, um Lösungsmittel aus dem cellulosischen Spinnvlies auszuwaschen.

Weiters kann der Verbundvliesstoff in einem Behandlungsschritt einer Wasserstrahlverfestigung unterzogen werden, in welcher dieser durch (Hochdruck-) Wasserstrahlen zusätzlich verfestigt wird. Die Wasserstrahlverfestigung kann zudem helfen, die physikalische Vermischung zwischen den Filamenten des Verbundvliesstoffs und den Kurzfasern im Vermischungsbereich zu erhöhen und somit die Integrität des Verbundvliesstoffs zu verbessern.

Weiters kann der Verbundvliesstoff in einem Behandlungsschritt einer Wasserstrahlprägung (Hydro-Embossing) oder einer Wasserstrahlperforierung unterworfen werden. Dabei können Muster, dreidimensionale Strukturen und Perforationen in den Verbundvliesstoff eingebracht werden.

Nach einer Wäsche oder Wasserstrahlverfestigung kann der Verbundvliesstoff in einem weiteren Behandlungsschritt noch einer Trocknung unterzogen werden, um Restfeuchtigkeit aus dem Verbundvliesstoff zu entfernen.

In einem optionalen Behandlungsschritt kann der Verbundvliesstoff auch noch einem Krepp-Prozess unterzogen werden, wodurch der Verbundvliesstoff mit einer Krepp-Struktur versehen wird.

Ein zuverlässiges Verfahren zur Herstellung eines mehrlagigen Verbundvliesstoffs kann geschaffen werden, wenn die cellulosische Spinnmasse durch eine Vielzahl von Düsenlöchern zumindest einer zweiten Spinndüse zu Filamenten extrudiert wird und die Filamente j eweils in Extrusionsrichtung verstreckt werden, wobei die Filamente der zweiten Spinndüse zur Bildung eines zweiten Spinnvlieses im Verbundvliesstoff in Wirrlage über dem mit den Kurzfasern beaufschlagten Spinnvlies auf der Fördereinrichtung abgelegt werden. So kann über dem bereits gebildeten ersten Spinnvlies, welches bereits mit den Kurzfasern versehen wurde und mit diesen einen Vermischungsbereich ausbildet, ein zweites cellulosisches Spinnvlies abgelegt werden.

Das zweite cellulosische Spinnvlies kann dabei vorzugsweise direkt auf der Schicht aus Kurzfasern aufgetragen werden und so mit dieser wiederum eine rein physikalische Verbindung ausbilden. Bevorzugt kann das zweite cellulosische Spinnvlies andere innere und strukturelle Eigenschaften als das erste Spinnvlies aufweisen, also insbesondere ein unterschiedliches Flächengewicht, eine unterschiedliche Luftdurchlässigkeit, unterschiedliche Filamentdurchmesser, etc.

Auf dem zweiten cellulosischen Spinnvlies kann wiederum im noch nie getrockneten Zustand eine zweite Schicht aus Kurzfasern aufgebracht werden, welche mit dem zweiten Spinnvlies einen zweiten Vermischungsbereich ausbildet, in welchem die Filamente des zweiten Spinnvlieses mit den Kurzfasern der zweiten Schicht physikalisch vermischt sind. Hierzu wird auf die obige Beschreibung verwiesen. Auch die Kurzfasern der zweiten Schicht können sich von den Kurzfasern der ersten Schicht unterscheiden, um so einen Verbundvliesstoff mit besonders vielseitigem Einsatzbereich herstellen zu können.

In gleicher Weise wie zuvor für das zweite Spinnvlies und die zweite Schicht aus Kurzfasern beschrieben, können auch dritte und weitere cellulosische Spinnvliese bzw. Schichten aus Kurzfasern auf den bereits geformten Verbundvliesstoff aufgebracht werden.

Das erfindungsgemäße Verfahren kann besonders vorteilhaft für die Herstellung eines Verbundvliesstoffs mit einem cellulosischen Spinnvlies aus Lyocell-Spinnmasse verwendet werden. Eine Lyocell-Spinnmasse ist dabei eine Lösung von Cellulose in einem Direktlösemittel.

Das Direktlösemittel kann bevorzugt ein tertiäres Aminoxid, bevorzugt N-Methylmorpholin-N-oxid (NMMO) in wässriger Lösung, oder eine ionische Flüssigkeit sein, in welcher Cellulose ohne chemische Derivatisierung gelöst werden kann.

Der Gehalt an Cellulose in der Spinnmasse kann dabei zwischen 4 % und 17 %, bevorzugt zwischen 5 % und 15 %, besonders bevorzugt zwischen 6 % und 14 % betragen.

Die innere Struktur des Spinnvlieses kann zudem zuverlässig gesteuert werden, wenn die aus der Spinndüse extrudierten Filamente zumindest teilweise koaguliert werden. Dazu können die Filamente bevorzugt mit einer wasserhaltigen Koagulationsflüssigkeit beaufschlagt werden, welcher vorzugsweise in Form von Flüssigkeit, Gas, Nebel, Dampf, etc., auf die Filamente aufgebracht wird.

Wird als Direktlösemittel in der Lyocell-Spinnmasse NMMO verwendet, so kann die Koagulationsflüssigkeit ein Gemisch aus vollentsalztem Wasser und 0 Gew.-% bis 40 Gew.-% NMMO, bevorzugt 10 Gew.-% bis 30 Gew.-% NMMO, besonders bevorzugt 15 Gew.-% bis 25 Gew.-% NMMO, sein. Dabei kann eine besonders zuverlässige Koagulation der extrudierten Filamente erreicht werden.

Das erfindungsgemäße Verfahren kann durch eine Vorrichtung zur Herstellung eines Verbundvliesstoffs durchgeführt werden, wobei die Vorrichtung aufweist: eine Spinnmasseherstellung für die Herstellung einer cellulosischen Spinnmasse, zumindest eine Spinnvliesanlage für die Herstellung des cellulosischen Spinnvlieses aus der Spinnmasse, wobei die Spinnvliesanlage zumindest eine Spinndüse zur Extrusion der Spinnmasse zu Filamenten, zumindest ein Koagulationssystem zur zumindest teilweisen Koagulation der Filamente und einer Fördereinrichtung zur Ablage der Filamente und Bildung des Spinnvlieses aufweist, eine Wäsche, optional eine Wasserstrahlverfestigung, einen Trockner, optional eine Krepp-Vorrichtung und einen Wickler. Des Weiteren weist die Vorrichtung erfindungsgemäß eine Nasslegeeinrichtung oder eine Trockenlegeeinrichtung für die Beaufschlagung des cellulosischen Spinnvlieses mit Kurzfasern auf, wobei die Nasslegeeinrichtung bzw. die Trockenlegeeinrichtung der Kurzfasern zwischen zwei Spinnvliesanlagen und/oder vor, innerhalb und/oder am Ende der Wäsche vorgesehen ist.

### Kurzbeschreibung der Figuren

Im Folgenden werden bevorzugte Ausführungsformen der Erfindung anhand der Zeichnungen näher dargestellt. Es zeigen:
- Fig. 1: eine schematische Darstellung des erfindungsgemäßen Verfahrens zur Herstellung eines Verbundvliesstoffs gemäß einer ersten Ausführungsvariante,
- Fig. 2: eine schematische Darstellung des erfindungsgemäßen Verfahrens zur Herstellung eines Verbundvliesstoffs gemäß einer zweiten Ausführungsvariante,
- Fig. 3: eine schematische Darstellung des erfindungsgemäßen Verfahrens zur Herstellung eines Verbundvliesstoffs gemäß einer dritten Ausführungsvariante,
- Fig. 4: eine Elektronenmikroskop-Aufnahme eines ersten erfindungsgemäßen Verbundvliesstoffs und,
- Fig. 5: eine Elektronenmikroskop-Aufnahme eines zweiten erfindungsgemäßen Verbundvliesstoffs.

### Wege zur Ausführung der Erfindung

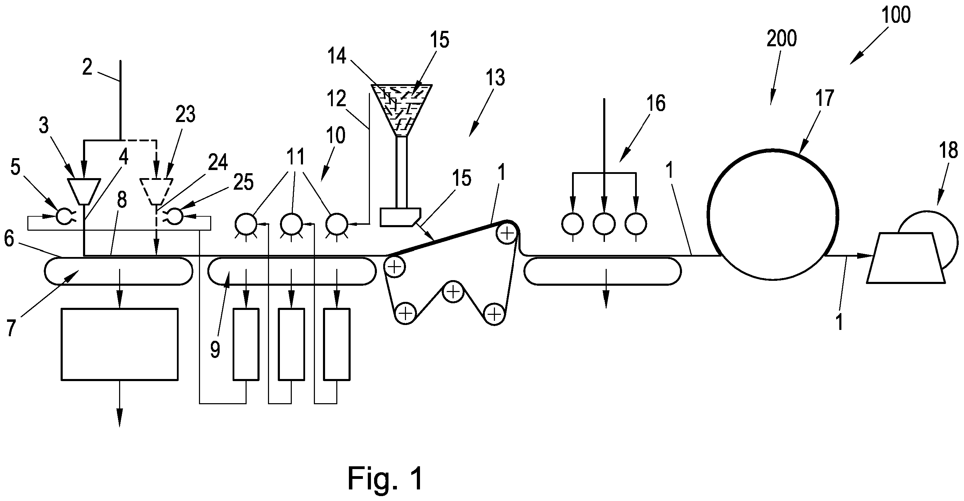

Fig. 1 zeigt ein erfindungsgemäßes Verfahren 100 zur Herstellung eines Verbundvliesstoffs 1 und eine Vorrichtung 200 zur Durchführung des Verfahrens 100 gemäß einer ersten Ausführungsvariante der Erfindung. In einem ersten Verfahrensschritt wird dabei eine Spinnmasse 2 aus einem cellulosischen Rohmaterial erzeugt und an eine Spinndüse 3 der Vorrichtung 200 zugeführt. Das cellulosische Rohmaterial zur Herstellung der Spinnmasse 2, welche in den Figuren nicht näher dargestellt ist, kann dabei ein zur Herstellung von Lyocellfasern geeigneter Zellstoff aus Holz oder anderen pflanzlichen Ausgangsstoffen sein. Es ist aber ebenso denkbar, dass das cellulosische Rohmaterial zumindest teilweise aus Produktionsabfällen der Spinnvlies-Erzeugung oder recycelten Textilien besteht. Die Spinnmasse 2 ist dabei eine Lösung aus Cellulose in NMMO und Wasser, wobei der Gehalt an Cellulose in der Spinnmasse 2 zwischen 3 Gew.-% und 17 Gew.-% beträgt.

Die Spinnmasse 2 wird dann in einem nächsten Schritt durch eine Vielzahl von Düsenlöchern der Spinndüse 3 zu Filamenten 4 extrudiert. Die extrudierten Filamente 4 werden dann in einem Verstreckungsluftstrom in Extrusionsrichtung beschleunigt und verstreckt, was in den Figuren jedoch nicht näher dargestellt wurde.

In einer Ausführungsvariante kann der Verstreckungsluftstroms dabei zwischen den Düsenlöchern der Spinndüse 3 austreten. In einer weiteren Ausführungsvariante kann der Verstreckungsluftstrom alternativ um die Düsenlöcher herum austreten. Dies ist in den Figuren jedoch nicht näher dargestellt. Solche Spinndüsen 3 mit Verstreckungseinrichtungen zur Erzeugung eines Verstreckungsluftstroms sind aus dem Stand der Technik (US 3,825,380 A, US 4,380,570 A, WO 2019/068764 A1) bekannt.

Die extrudierten und verstreckten Filamente 4 werden in der gezeigten, bevorzugten Ausführungsform zudem mit einem Koagulationsmittel aus einer Koagulationseinrichtung 5 beaufschlagt. Dieses Koagulationsmittel ist in der Regel Wasser oder eine wässrige Lösung in der Form von Flüssigkeit, Nebel oder Dampf. Durch Kontakt der Filamente 4 mit dem Koagulationsmittel werden die Filamente 4 zumindest teilweise koaguliert bzw. regeneriert, was insbesondere Verklebungen zwischen den einzelnen extrudierten Filamenten 4 reduziert.

Die verstreckten und zumindest teilweise koagulierten Filamente 4 werden dann in Wirrlage auf der Ablage 6 einer Fördereinrichtung 7 abgelegt, um ein cellulosisches Spinnvlies 8 zu bilden.

Das Spinnvlies 8 wird nach dem Bilden über das Förderband 9 durch eine Wäsche 10 geführt, in welcher das Spinnvlies 8 gewaschen wird, um es von Rückständen des Lösungsmittels, nämlich dem in der Spinnmasse 2 enthaltenen NMMO, zu befreien. Die Wäsche 10 ist dabei in einer bevorzugten Ausführungsvariante eine mehrstufige Gegenstromwäsche mit mehreren Waschstufen 11, wobei frische Waschlösung 12 an die letzte Stufe zugeführt wird und die zunehmend verbrauchte Waschlösung einer Waschstufe 11 jeweils an die vorhergehende Waschstufe 11 weitergegeben wird.

Nach der Wäsche 10 wird das Spinnvlies 8 durch eine Nasslegeeinrichtung 13 geführt, worin das noch nie getrocknete Spinnvlies 8 mit cellulosischen Kurzfasern 14 beaufschlagt wird, wobei die Kurzfasern 14 in einer Suspension 15 vorliegen und die Suspension 15 auf das Spinnvlies 8 aufgebracht bzw. aufgesprüht wird. Die Suspension 15 weist dabei einen Gehalt zwischen 0,01 und 2,00 Gew.-% Kurzfasern 14 auf. Durch das Vorsehen einer separaten Nasslegeeinrichtung 13 in dem Verfahren 100 bzw. der Vorrichtung 200 kann ein unabhängiger Betrieb der Kurzfaser-Zuführung von der umgebenden Spinnvlieserzeugung gewährleistet werden.

Während dem Aufbringen der die Kurzfasern 14 enthaltenden Suspension 15 auf das noch nie getrocknete Spinnvlies 8 wird eine Schicht von Kurzfasern 14 über dem Spinnvlies 8 geformt und dabei der Verbundvliesstoff 1 gebildet. In dem Verbundvliesstoff bildet sich zudem ein Vermischungsbereich aus, in welchem die Filamente des Spinnvlieses 8 und die Kurzfasern 14 rein physikalisch vermischt vorliegen und daher ohne chemische Verbindung zusammenhalten.

Im Anschluss an die Nasslegeeinrichtung 13 wird der Verbundvliesstoff 1 dann in einem nächsten Schritt einer Wasserstrahlverfestigung 16 unterzogen. Im Zuge dieser Wasserstrahlverfestigung 16 findet eine weitere Verbindung des Spinnvlieses 8 mit der Schicht aus Kurzfasern 14 statt, wobei sich die physikalischen Verbindungen zwischen den Filamenten des Spinnvlieses 8 und den Kurzfasern 14 durch Vermischung, insbesondere durch Verhakung, Verschlaufung, Haftreibung, etc., weiter verstärken.

Um schließlich die verbliebene Feuchtigkeit aus dem Verbundvliesstoff 1 zu entfernen und einen verpackungsfertigen Verbundvliesstoff 1 zu erhalten, wird der Verbundvliesstoff 1 im Anschluss an die Wasserstrahlverfestigung 16 einer Trocknung 17 unterzogen.

Schließlich wird das Verfahren 200 durch optionales Aufwickeln 18 und/oder Verpacken des fertigen Verbundvliesstoffs 1 abgeschlossen.

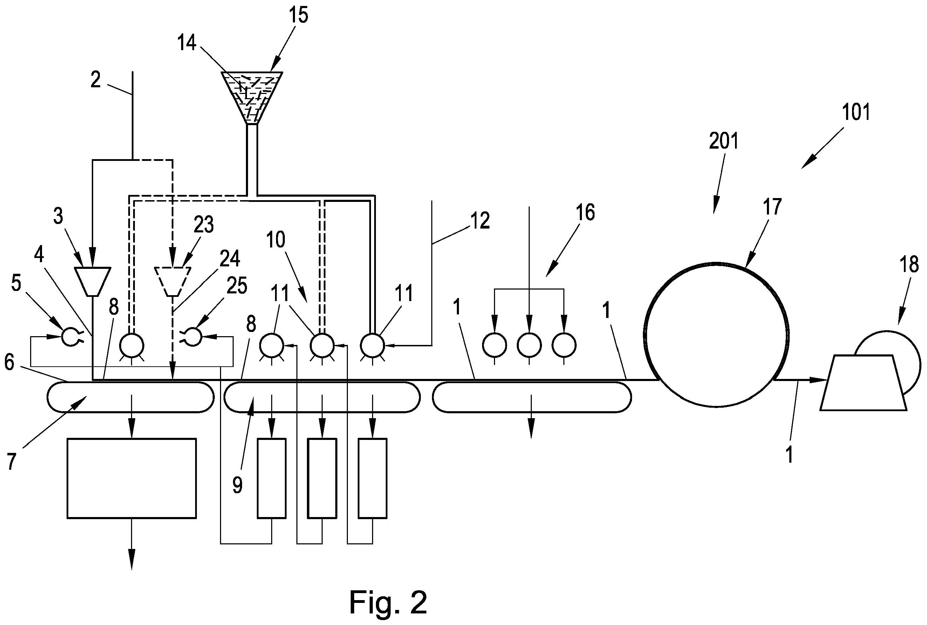

In Fig. 2 ist eine zweite alternative Ausführungsvariante des erfindungsgemäßen Verfahrens 101 bzw. der Vorrichtung 201 dargestellt. Dabei wird gegenüber der in Fig. 1 gezeigten Ausführungsvariante die Suspension 15 mit den Kurzfasern 14 nicht an eine eigenständige Nasslegeeinrichtung 13 zugeführt. Vielmehr werden die Kurzfasern 14 der Waschlösung 12 zumindest einer Waschstufe 11, vorzugsweise der letzten Waschstufe 11, der Wäsche 10 derart zugeführt, dass das Spinnvlies 8 während der Wäsche 10 zugleich gewaschen und mit den Kurzfasern 14 beaufschlagt wird. Hinsichtlich der anderen Merkmale wird auf die Ausführungen zu Fig. 1 verwiesen.

Dies bildet die technisch einfachste und zudem auch wirtschaftlichste Ausführungsvariante der Erfindung, da lediglich die Wäsche 10 einer bestehenden Spinnvliesanlage derart umgerüstet werden muss, dass eine oder mehrere der bestehenden Waschstufen 11 neben ihrer ursprünglichen Funktion der homogenen Verteilung und Auftragung der Waschlösung 12 auch zur Beaufschlagung des Spinnvlieses 8 mit Suspensionen 15 aus Kurzfasern 14 dienen.

Die Suspension 15 enthält dabei Kurzfasern 14 im Konzentrationsbereich zwischen 0,01 Gew.-% und 2,00 Gew.-% und Faserlängen von 0,5 mm bis 20 mm. In einer weiteren Ausführungsvariante, welche in den Figuren nicht dargestellt ist, können die Kurzfasern 14 auch mechanisch fibrillierte Fasern bzw. Zellstofffasern sein, wobei zusätzlich ein Refiner zur Fibrillierung der Kurzfasern benötigt wird.

Die Suspension 15 ist vorzugsweise durch Suspendierung der Kurzfasern 14 in Frischwasser gebildet. Bevorzugt wird die Suspension 15 nur im Bereich der letzten beiden Waschstufen 11 auf das Spinnvlies 8 aufgebracht, um eine Verschiebung der Konzentrationsverteilung von Lösungsmittel in der Waschlösung über die gesamte Wäsche 10 nur minimal zu beeinträchtigen und somit zusätzliche technische Anforderungen und steigende Betriebskosten in Zusammenhang mit der Aufbereitung bzw. Aufkonzentrierung des lösungsmittelhaltigen Waschwassers bestmöglich zu vermeiden. Zudem kann durch Zuführung der Suspension 15 an die Wäsche 10 der Bedarf an Waschlösung 12 in der Wäsche 10 in entsprechendem Maß reduziert werden.

In einer weiteren Ausführungsvariante, welche in Fig. 2 strichliert dargestellt ist, kann nach der ersten Spinndüse 3 eine zweite Spinndüse 23 vorgesehen sein, durch welche ebenso die Spinnmasse 2 zu Filamenten 24 extrudiert wird. Dabei werden die Filamente 24 auf der Fördereinrichtung 7 über dem ersten Spinnvlies 8 zur Bildung eines zweiten Spinnvlieses abgelegt.

Die Kurzfasern 14 enthaltende Suspension 15 wird dabei zwischen der ersten Spinndüse 3 und der zweiten Spinndüse 23 auf das erste Spinnvlies 8 aufgebracht um die Schicht aus Kurzfasern 14 zu erzeugen. Das zweite Spinnvlies wird danach direkt auf der Schicht aus Kurzfasern 14 abgelegt, so dass ein mehrlagiger Verbundvliesstoff 1 mit mehreren cellulosischen Spinnvliesen 8 und Kurzfasern 14 gebildet wird. Dabei kann der Verbundvliesstoff 1 optional - wie zuvor beschrieben - in der Wäsche 10 zusätzlich mit Kurzfasern 14 beaufschlagt werden.

In einer weiteren Ausführungsvariante wird der mehrlagige Verbundvliesstoff 1 in der nachfolgenden Wasserstrahlverfestigung 16 derart behandelt, dass der Lagenaufbau aus abwechselnden Spinnvliesen 8 und Kurzfasern 14 weitgehend unkenntlich gemacht werden kann und somit ein noch ausgedehnterer Vermischungsbereich im Verbundvliesstoff 1 gebildet wird

Für alle der zuvor genannten Ausführungsformen des erfindungsgemäßen Verfahrens 100, 101 ergeben sich demnach maßgebliche Einsparungen hinsichtlich des Energie- und Frischwasserbedarfes gegenüber dem Stand der Technik, da
a) bereits feuchtes, niemals getrocknetes Spinnvlies 8 zum Einsatz kommt und kein bereits getrocknetes Substrat durch die Zugabe der Kurzfasern 14 in Form einer Suspension 15 wieder nass gemacht wird,
b) die zugefügten, nassen Kurzfasern 14 weniger Wasser pro Masseneinheit Cellulose in das noch feuchte Vliesprodukt einbringen als eine äquivalente Menge nicht-getrockneten cellulosischen Spinnvlieses,
c) der Bedarf an Waschlösung 12 in der Wäsche 10 um die als Suspension 15 zugeführten Wassermengen reduziert werden kann und
d) das Abwasser einer Wasserstrahlverfestigung 16 als Frischwasser für die Wäsche 10 bzw. zur Herstellung der Suspension 15 verwendet werden kann.

Darüber hinaus kann in einer weiteren Ausführungsvariante der apparative Aufwand des Verfahrens 101 weiter vereinfacht werden, indem die Wasserstrahlverfestigung 16 bereits zusammen mit der Wäsche 10 auf dem Förderband 9 stattfindet. Dabei kann letzteres zusätzlich eine dreidimensionale Prägestruktur aufweisen, die durch die Wasserstahlbehandlung auf das Spinnvlies übertragen werden kann.

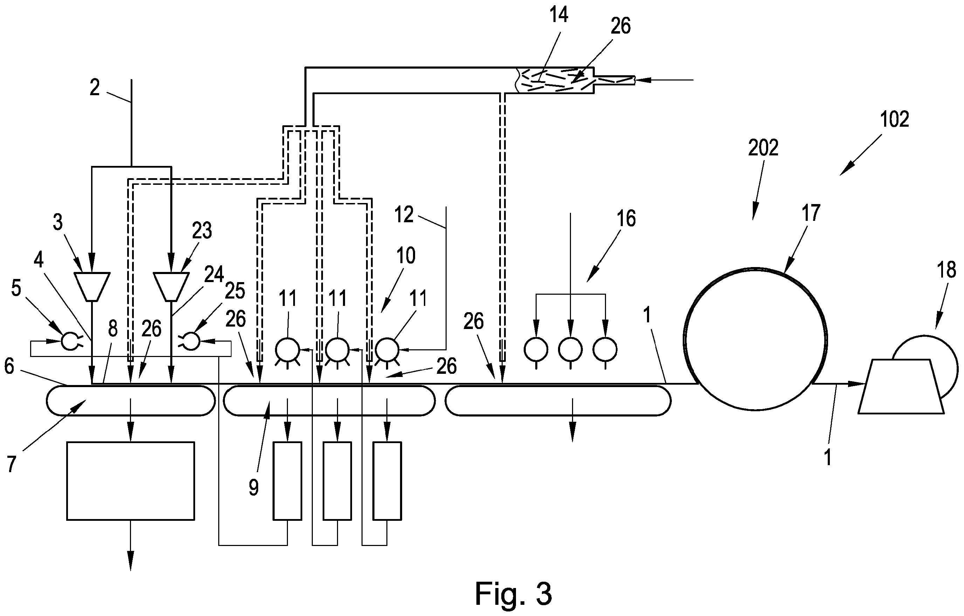

In Fig. 3 ist eine dritte Ausführungsvariante des erfindungsgemäßen Verfahrens 102 und der Vorrichtung 202 dargestellt. Dabei werden die Kurzfasern 14 im Gegensatz zu den in den Fig. 1 und 2 dargestellten Ausführungsvarianten nicht in Form einer Suspension 15 auf das Spinnvlies 8 aufgebracht, sondern mithilfe der Airlay-Technologie in Form eines Luftstroms 26 auf das Spinnvlies 8 aufgebracht. Hinsichtlich der weiteren Merkmale des Verfahrens 102 wird auf die Ausführungen zu den Fig. 1 und 2 verwiesen.

Die Zufuhr des Kurzfasern 14 enthaltenden Luftstroms 26 an das Spinnvlies 8 kann zwischen zwei Spinndüsen 3, 23 sowie vor, innerhalb und/oder nach der Wäsche 10 erfolgen.

Um eine homogene Verteilung der Kurzfasern 14 im Luftstrom 26 zu ermöglichen und die Kurzfasern 14 bis zum Ort der Aufbringung transportieren zu können, sind spezielle Aggregate zur Faseröffnung sowie zum Transport der Kurzfasern 14 vorgesehen, welche in den Figuren jedoch nicht näher dargestellt wurden.

In einer weiteren, in den Figuren nicht näher dargestellten Ausführungsvariante, können die Kurzfasern 14 auch direkt an die Verstreckungseinrichtungen in den Spinndüsen 3, 23 zugeführt werden und so mit dem Verstreckungsluftstrom direkt auf die Filamente 4 des Spinnvlieses 8 aufgeschlagen werden. Die Kurzfasern 14 werden dabei direkt mit den Filamenten 4 im Spinnvlies vermischt, wodurch ein sich über die gesamte Dicke des Verbundvliesstoffes 1 erstreckender Vermischungsbereich geschaffen wird. Dazu kann in einer Ausführungsvariante etwa ein Sekundärluftstrom, welcher die Kurzfasern 14 aufweist, unterhalb den Spinndüsen 3, 23 eingebracht werden, wodurch dieser mit dem Verstreckungsluftstrom zusammengeführt wird, um die Filamente 4 mit den Kurzfasern 14 zu beaufschlagen.

In einer weiteren, in den Figuren nicht dargestellten Ausführungsform wird ein mehrlagiges Spinnvlies 8 durch zwei hintereinander angeordnete Spinndüsen 3, 23 hergestellt, jedoch vor dem Aufbringen der Kurzfasern 14 wieder in die zwei Spinnvlies-Lagen aufgetrennt, wobei anschließend die Kurzfasern 14 - entweder als Suspension 15 oder trocken in einem Luftstrom 26 - zwischen beide Spinnvlies-Lagen eingebracht werden. Danach werden die beiden Spinnvlies-Lagen wieder verbunden und der erhaltene Verbundvliesstoff 1 in einer Wasserstrahlverfestigung 16 verfestigt.

Um die vollständige biologische Abbaubarkeit der erfindungsgemäßen Verbundvliesstoffe 1 gewährleisten zu können, bestehen die mittels der oben beschriebenen Ausführungsvarianten eingebrachten cellulosischen Kurzfasern ausschließlich aus den Stoffgattungen der industriell hergestellten Zellstoffe, der aus Recyclingprozessen wiedergewonnenen Zellstoffe, der cellulosischen Kurzschnittfasern, der cellulosischen Naturfasern oder aus allen denkbaren Kombinationen dieser Stoffgruppen.

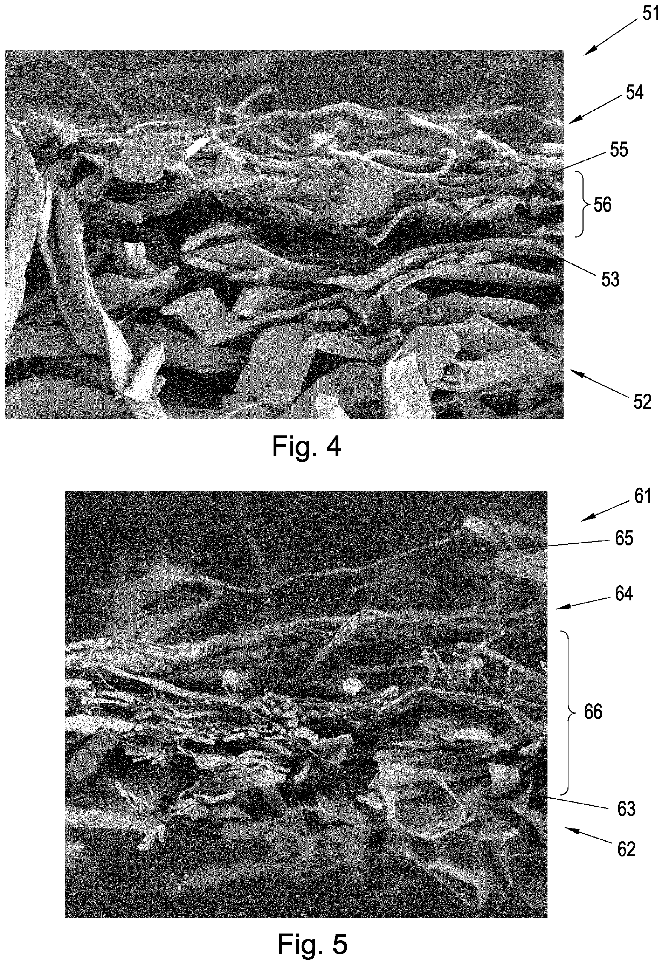

In den Fig. 4 und 5 sind Elektronenmikroskop-Aufnahmen von erfindungsgemäß hergestellten Verbundvliesstoffen 51, 61 gezeigt.

Fig. 4 zeigt einen Verbundvliesstoff 51, in welchem zwischen einer Schicht 52 aus Kurzfasern 53 (in diesem Fall Zellstofffasern) und einem cellulosischen Spinnvlies 54 (Lyocell-Spinnvlies) ein begrenzter Vermischungsbereich 56 ausgebildet ist. In dem Vermischungsbereich 56 sind die Filamente 55 des Spinnvlieses 54 mit den Kurzfasern 53 physikalisch vermischt.

Fig. 5 zeigt einen Verbundvliesstoff 61, welcher keine erkennbare Schichtstruktur mehr aufweist. Hier durchdringt das cellulosische Spinnvlies 64 (Lyocell-Spinnvlies) die Schicht 62 aus Kurzfasern 63 (Zellstoffasern) im Wesentlichen vollständig. Der Vermischungsbereich 66 erstreckt sich somit über die gesamte Dicke des Verbundvliesstoffs 61. Die Kurzfasern 63 sind also homogen über den Verbundvliesstoff 61 verteilt.

### Beispiele

Im Folgenden werden die Vorteile der Erfindung anhand mehrerer Beispiele exemplarisch dargestellt.

Zur Bestimmung verschiedener Parameter der erzeugten Verbundvliesstoffe wurden folgende Messmethoden verwendet:

### Flächengewicht

Das Flächengewicht gibt an, welche Masse der Verbundvliesstoff pro Flächeneinheit aufweist. Die Bestimmung des Flächengewichtes erfolgt nach der Norm NWSP 130.1.R0 (15).

### Zugfestigkeit/Dehnung

Die Zugfestigkeitswerte geben Aufschluss über die Robustheit des Wischtuches bei Wischvorgängen bzw. bei der Entnahme aus der Verpackung. Eine erhöhte Zugfestigkeit bewirkt daher eine höhere Widerstandsfähigkeit gegen Beschädigung bei Zugbelastung. Eine geringe Dehnung ist hilfreich bei der Entnahme der Wischtücher aus der Verpackung und hilft dabei, einen guten Sitz des Wischtuches in der Wischhand zu bewahren. Die Zugfestigkeit bzw. Dehnung werden gemäß DIN EN 29073 Teil 3 / ISO 9073-3 (Version von 1992) bestimmt.

### Wicking

Der Steighöhentest (Wicking) gibt Aufschluss über die Verteilungsgeschwindigkeit einer Flüssigkeit bzw. einer Lotion über die Vliesfläche in Maschinen- und Querrichtung. Die unten angeführten Werte beziehen sich auf Steighöhen von Wasser im Vlies über einen Zeitraum von 300s. Bestimmt wird die Steighöhe gemäß NWSP 010.1.R0 (15).

### Vlieskonditionierung

Vor jeder Messung wurden die Proben bei 23 °C (± 2 °C) und 50 % (± 5 %) relativer Luftfeuchte über eine Zeitspanne von 24 h konditioniert.

### Elektronenmikroskopie

Die elektronenmikroskopischen Aufnahmen wurden unter Einsatz eines Messgerätes des Typs ThermoFisher Quanta 450 (5kV, Spot 3, WD10, EDT) bzw. Thermo Fisher Scientific, Phenom ProX gewonnen. Die Stellenauswahl erfolgte nach dem Zufallsprinzip.

Die nachfolgend beschriebenen Verbundvliesstoffe wurden nach dem erfindungsgemäßen Verfahren so hergestellt, dass einlagige Lyocell-Spinnvliese mit Flächengewichten von 20-45 g/m² erzeugt und mit Hilfe einer zusätzlich installierten Nasslegevorrichtung innerhalb der Wäsche mit einer 0,8-1,5 %-igen Zellstoffsuspension beladen wurden. Der Verbundvliesstoff wurde schließlich mittels Wasserstrahlverfestigung unter dem Einsatz dreier Druckstufen (mit Drücken zwischen 40 bar und 100 bar) behandelt, auf eine Endfeuchte kleiner 10% getrocknet und als Rollenware mit Flächengewichten von 30-80 g/m² gewonnen. Die eingesetzten Düsenstreifen in der Wasserstrahlverfestigung zeigten ein einreihiges Lochmuster mit Lochdurchmessern von 0,12 mm sowie einem Lochabstand von 13 Löchern/cm.

Die detaillierten Parameter der durchgeführten Versuche sowie die gemessenen Eigenschaften der zugehörigen Verbundvliesstoffe sind nachfolgend in Tabelle 1 dargestellt.

**Tabelle 1: Versuchsparameter und Produkteigenschaften**

| Beispiel / Produkt | 1 | 2 | 3 | 4 | 5 |
|---|---|---|---|---|---|
| Flächengewicht des Substrates [g/m²] | 45 | 20 | 20 | 20 | 20 |
| Feststoffanteil der Suspension [%] | 0,5 | 0,7 | 0,8 | 1,0 | 1,2 |
| Wasserstrahlverfestigung Druck p1 [bar] | 40 | 70 | 40 | 40 | 40 |
| Wasserstrahlverfestigung Druck p2 [bar] | 40 | 80 | 40 | 40 | 40 |
| Wasserstrahlverfestigung Druck p3 [bar] | 60 | 100 | 70 | 40 | 40 |
| Flächengewicht des Endproduktes [g/m²] | 70 | 45 | 45 | 45 | 60 |
| Zugfestigkeit (trocken, MD) [N/5cm] | 45 | 16 | 30 | 33 | 40 |
| Zugfestigkeit (trocken, CD) [N/5cm] | 18 | 7 | 10 | 12 | 15 |
| Zugfestigkeit (nass, MD) [N/5cm] | 14 | 6 | 10 | 11 | 8 |
| Zugfestigkeit (nass, CD) [N/5cm] | 6 | 3 | 5 | 5 | 5 |
| Dehnung (trocken, MD) [%/5cm] | 4 | 4 | 4 | 4 | 4 |
| Dehnung (trocken, CD) [%/5cm] | 7 | 7 | 7 | 7 | 7 |
| Dehnung (nass, MD) [%/5cm] | 14 | 8 | 8 | 8 | 8 |
| Dehnung (nass, CD) [%/5cm] | 27 | 28 | 18 | 20 | 25 |
| Wicking MD [mm] | 146 | 161 | 149 | 150 | 152 |
| Wicking CD [mm] | 122 | 139 | 132 | 131 | 133 |

Parallel zu den angeführten, erfindungsgemäß hergestellten Verbundvliesstoffen wurde ein handelsüblicher Verbundvliesstoff basierend auf einem Polypropylenvliessubstrat mit eingearbeitetem Zellstoff bei einem Gesamtflächengewicht von 45 g/m² hinsichtlich seiner mechanischen Eigenschaften untersucht. Mit Trockenzugfestigkeiten von 33 N/5cm in Maschinenrichtung (MD) und 13 N/5cm in Querrichtung (CD) weist das kommerzielle Produkt vergleichbare Trockenfestigkeiten zu dem in Tabelle 1 angeführten Beispielprodukt 4 auf. Die Festigkeitswerte geben Aufschluss über die Robustheit des Wischtuches bei Wischvorgängen bzw. Entnahme aus der Verpackung, wobei die angeführten, erfindungsgemäßen Verbundvliesstoffe ohne den Einsatz eines synthetischen Trägervlieses auskommen. Ausschließlich nassgelegte Papierprodukte vergleichbaren Flächengewichtes zeigen hingegen geringere Nasszugfestigkeiten von 4-8 N/5cm, welche für den üblichen Gebrauch als Nasswischtuch jedoch kaum noch ausreichen.

Der zuvor angeführte, handelsübliche Verbundvliesstoff, basierend auf einem Polypropylenvliessubstrat mit eingearbeitetem Zellstoff bei einem Gesamtflächengewicht von 45 g/m² wurde auch hinsichtlich seiner Fähigkeit zur Flüssigkeitsaufnahme untersucht: Gemäß dem Wicking-Test wurden deutlich geringere Steighöhen von 94 mm in MD und 73 mm in CD gemessen, was dem erfindungsgemäßen Produkt eindeutige Vorteile hinsichtlich seiner Beladungsgeschwindigkeit mit Lotionen in Konvertierungsprozessen zu kommerziellen Nasswischtüchern zuspricht, d.h. die trockene Rollenware nimmt während des Beladungsprozesses die Lotion deutlich schneller auf und die homogen verteilte Flüssigkeit innerhalb der geschlossenen Wischtuchpackungen zeigt wesentlich langsamer die Ausbildung eines Beladungsgradienten durch die gewichtsbedingte Absenkung der Flüssigkeit.

## Patentansprüche

1. Verfahren zur Herstellung eines Verbundvliesstoffs (1), aufweisend zumindest ein Spinnvlies (8, 54, 64), welches in Wirrlage abgelegte und im Wesentlichen endlose regenerierte cellulosische Filamente (4, 55, 65) aufweist, und zumindest eine Schicht (52, 62) aus biobasierten biologisch abbaubaren Kurzfasern (14, 53, 63), bei dem eine Cellulose enthaltende Spinnmasse (2) durch eine Vielzahl von Düsenlöchern zumindest einer Spinndüse (3) zu Filamenten (4) extrudiert wird und die Filamente (4) jeweils in Extrusionsrichtung verstreckt werden, wobei die Filamente (4) zur Bildung eines Spinnvlieses (8) auf einer perforierten Fördereinrichtung (7) in Wirrlage abgelegt werden, und bei dem zur Bildung des Verbundvliesstoffs (1) zu dem Spinnvlies (8) Kurzfasern (14) hinzugefügt werden, **dadurch gekennzeichnet, dass** die Filamente (4) des Spinnvlieses (8) im noch nie getrockneten Zustand mit den Kurzfasern (14) beaufschlagt werden.

2. Verfahren nach Anspruch 1, **dadurch gekennzeichnet, dass** die Filamente (4) des Spinnvlieses (8) im noch nie getrockneten Zustand mit einer Suspension (15) aus den Kurzfasern (14) beaufschlagt werden.

3. Verfahren nach Anspruch 2, **dadurch gekennzeichnet, dass** die Suspension (15) zwischen 0,01 Gew.-% und 2,00 Gew.-% Kurzfasern (14) aufweist.

4. Verfahren nach Anspruch 2 oder 3, **dadurch gekennzeichnet, dass** die Filamente (4) des Spinnvlieses (8) während einer Wäsche (10) mit der Suspension (15) beaufschlagt werden.

5. Verfahren nach einem der Ansprüche 2 bis 14, **dadurch gekennzeichnet, dass** die Filamente (4) des Spinnvlieses (8) während dem Bilden des Spinnvlieses (8) mit der Suspension (15) beaufschlagt werden.

6. Verfahren nach einem der Ansprüche 1 bis 5, **dadurch gekennzeichnet, dass** die Filamente (4) des Spinnvlieses (8) im noch nie getrockneten Zustand mit einem die Kurzfasern (14) aufweisenden Luftstrom (26) beaufschlagt werden.

7. Verfahren nach Anspruch 6, **dadurch gekennzeichnet, dass** die Filamente (4) zur Verstreckung mit einem Verstreckungsluftstrom beaufschlagt werden, und dass die Kurzfasern (14) dem Verstreckungsluftstrom beigemengt werden, um die Filamente (4) des Spinnvlieses (8) im noch nie getrockneten Zustand mit den Kurzfasern (14) zu beaufschlagen.

8. Verfahren nach einem der vorhergehenden Ansprüche, **dadurch gekennzeichnet, dass** der Verbundvliesstoff (1) nach dem Beaufschlagen der Filamente (4) mit den Kurzfasern (14) zumindest einem Behandlungsschritt unterzogen wird, wobei der Behandlungsschritt ausgewählt ist aus der Gruppe bestehend aus: einer Wasserstrahlverfestigung (16), einer Wasserstrahlprägung, einer Wasserstrahlperforierung, einer Wäsche (10), einer Trocknung (17).

9. Verfahren nach einem der vorhergehenden Ansprüche, **dadurch gekennzeichnet, dass** die Spinnmasse (2) eine Lösung von Cellulose in einem Direktlösemittel, insbesondere einem tertiären Aminoxid, ist.

10. Verfahren nach einem der vorhergehenden Ansprüche, **dadurch gekennzeichnet, dass** die Filamente (4) nach der Extrusion aus der zumindest einen Spinndüse (3) zumindest teilweise koaguliert werden.

11. Verfahren nach einem der vorhergehenden Ansprüche, **dadurch gekennzeichnet, dass** die Kurzfasern (14, 53, 63) cellulosische Kurzfasern (14, 53, 63) sind und der Verbundvliesstoff (1, 51, 61) im absolut trockenen Zustand einen Gehalt an Cellulose von zumindest 93 Gew.-%, insbesondere zumindest 95 Gew.-%, bevorzugt zumindest 97 Gew.-%, aufweist.

12. Verfahren nach einem der vorhergehenden Ansprüche, **dadurch gekennzeichnet, dass** der Verbundvliesstoff (1, 51, 61) zwischen 10 Gew.-% und 99 Gew.-%, insbesondere zwischen 15 Gew.-% und 95 Gew.-%, bevorzugt zwischen 20 Gew.-% und 90 Gew.-%, an cellulosischen Filamenten (4, 55, 65) des Spinnvlieses (8, 54, 64) und zwischen 1 Gew.-% und 90 Gew.-%, insbesondere zwischen 5 Gew.-% und 85 Gew.-%, bevorzugt zwischen 10 Gew.-% und 80 Gew.-%, an Kurzfasern (14, 53, 63) aufweist.

13. Verfahren nach einem der vorhergehenden Ansprüche, **dadurch gekennzeichnet, dass** der Verbundvliesstoff (1, 51, 61) im Wesentlichen frei von in Holz nicht natürlich vorkommenden Bindemitteln ist.

14. Verfahren nach einem der vorhergehenden Ansprüche, **dadurch gekennzeichnet, dass** die Kurzfasern (14, 53, 63) ausgewählt sind aus der Gruppe enthaltend: natürliche Cellulosefasern, Zellstofffasern, Viskose-, Modal-, Cupro-, und Lyocellfasern, chemisch modifizierte Cellulosefasern, recycelte cellulosische Fasern, Stärkefasern.

15. Verfahren nach einem der vorhergehenden Ansprüche, **dadurch gekennzeichnet, dass** die Kurzfasern (14, 53, 63) eine Länge zwischen 0,5 mm und 15 mm, insbesondere zwischen 1 und 12 mm, aufweisen.

16. Anlage (200, 201) zur Durchführung eines Verfahrens gemäß einem der Ansprüche 1 bis 15, aufweisend eine Spinnmasseherstellung für die Herstellung einer cellulosischen Spinnmasse, zumindest eine Spinnvliesanlage für die Herstellung des cellulosischen Spinnvlieses aus der Spinnmasse, wobei die Spinnvliesanlage zumindest eine Spinndüse (3) zur Extrusion der Spinnmasse (2) zu Filamenten (4), zumindest ein Koagulationssystem (5) zur zumindest teilweisen Koagulation der Filamente (4) und eine Fördereinrichtung (7) zur Ablage der Filamente (4) und Bildung des Spinnvlieses (1), eine Wäsche (10), optional eine Wasserstrahlverfestigung (16), einen Trockner (17), optional eine Krepp-Vorrichtung und einen Wickler (18) aufweist, **dadurch gekennzeichnet, dass** die Vorrichtung eine Nasslegeeinrichtung (13) oder eine Trockenlegeeinrichtung (26) für die Beaufschlagung des cellulosischen Spinnvlieses (1) mit Kurzfasern (14) aufweist, wobei die Nasslegeeinrichtung (13) bzw. die Trockenlegeeinrichtung (26) der Kurzfasern (14) zwischen zwei Spinnvliesanlagen und/oder vor, innerhalb und/oder am Ende der Wäsche (10) vorgesehen ist.

## Claims

1. A process for the production of a composite nonwoven fabric (1) comprising at least one spunbonded nonwoven (8, 54, 64), which exhibits essentially continuous regenerated cellulosic filaments (4, 55, 65) deposited in a random orientation, and at least one layer (52, 62) of biobased biodegradable short fibres (14, 53, 63), wherein a spinning mass (2) containing cellulose is extruded through a plurality of nozzle holes of at least one spinneret (3) to form filaments (4) and the filaments (4) are drawn, in each case, in the extrusion direction, wherein the filaments (4) are deposited in a random orientation on a perforated conveying device (7) to form a spunbonded nonwoven (8) and wherein short fibres (14) are added to the spunbonded nonwoven (8) to form the composite nonwoven fabric (1), **characterized in that** the filaments (4) of the spunbonded nonwoven (8) are charged with the short fibres (14) in the never-dried state.

2. A process according to claim 1, **characterized in that** the filaments (4) of the spunbonded nonwoven (8) are charged with a suspension (15) of the short fibres (14) in the never-dried state.

3. A process according to claim 2, **characterized in that** the suspension (15) comprises between 0.01 wt.-% and 2.00 wt.-% of short fibres (14).

4. A process according to claim 2 or 3, **characterized in that** the filaments (4) of the spunbonded nonwoven (8) are charged with the suspension (15) during a washing (10).

5. A process according to any of claims 2 to 14, **characterized in that** the filaments (4) of the spunbonded nonwoven (8) are charged with the suspension (15) during the formation of the spunbonded nonwoven (8).

6. A process according to any of claims 1 to 5, **characterized in that** the filaments (4) of the spunbonded nonwoven (8) are charged with an air stream (26) comprising the short fibres (14) in the never-dried state.

7. A process according to claim 6, **characterized in that** the filaments (4) are charged with a drawing air stream for drawing and the short fibres (14) are added to the drawing air stream in order to charge the filaments (4) of the spunbonded nonwoven (8) with the short fibres (14) in the never-dried state.

8. A process according to any of the preceding claims, **characterized in that**, after the filaments (4) have been charged with the short fibres (14), the composite nonwoven fabric (1) is subjected to at least one treatment step, the treatment step being selected from the group consisting of: a hydroentanglement (16), a water jet embossing, a water jet perforation, a washing (10), a drying (17).

9. A process according to any of the preceding claims, **characterized in that** the spinning mass (2) is a solution of cellulose in a direct solvent, particularly a tertiary amine oxide.

10. A process according to any of the preceding claims, **characterized in that**, after the extrusion from the at least one spinneret (3), the filaments (4) are coagulated at least partly.

11. A process according to any of the preceding claims, **characterized in that** the short fibres (14, 53, 63) are cellulosic short fibres (14, 53, 63) and the composite nonwoven fabric (1, 51, 61) in the absolutely dry state has a cellulose content of at least 93 wt.-%, in particular of at least 95 wt.-%, preferably of at least 97 wt.-%.

12. A process according to any of the preceding claims, **characterized in that** the composite nonwoven fabric (1, 51, 61) comprises between 10 wt.-% and 99 wt.-%, in particular between 15 wt.-% and 95 wt.-%, preferably between 20 wt.-% and 90 wt.-%, of cellulosic filaments (4, 55, 65) of the spunbonded nonwoven (8, 54, 64) and between 1 wt.-% and 90 wt.-%, in particular between 5 wt.-% and 85 wt.-%, preferably between 10 wt.-% and 80 wt.-%, of short fibres (14, 53, 63).

13. A process according to any of the preceding claims, **characterized in that** the composite nonwoven fabric (1, 51, 61) is essentially free from binders that do not occur naturally in wood.

14. A process according to any of the preceding claims, **characterized in that** the short fibres (14, 53, 63) are selected from the group comprising: natural cellulose fibres, pulp fibres, Viscose, Modal, Cupro and Lyocell fibres, chemically modified cellulose fibres, recycled cellulosic fibres, starch fibres.

15. A process according to any of the preceding claims, **characterized in that** the short fibres (14, 53, 63) have a length of between 0.5 mm and 15 mm, in particular of between 1 and 12 mm.

16. A plant (200, 201) for the implementation of a process according to any of claims 1 to 15, comprising a spinning mass production for the production of a cellulosic spinning mass, at least one spunbond plant for the production of the cellulosic spunbonded nonwoven from the spinning mass, the spunbond plant comprising at least one spinneret (3) for the extrusion of the spinning mass (2) to form filaments (4), at least one coagulation system (5) for the at least partial coagulation of the filaments (4) and a conveying device (7) for depositing the filaments (4) and forming the spunbonded nonwoven (1), a washing (10), optionally a hydroentanglement (16), a dryer (17), optionally a creping device and a winder (18), **characterized in that** the device comprises a wet-laying device (13) or a dry-laying device (26) for charging the cellulosic spunbonded nonwoven (1) with short fibres (14), the wet-laying device (13) or, respectively, the dry-laying device (26) for the short fibres (14) being provided between two spunbond plants and/or before, within and/or at the end of the washing (10).

## Revendications

1. Procédé permettant de produire un non-tissé composite (1), comportant au moins un non-tissé filé (8, 54, 64), lequel comporte des filaments cellulosiques (4, 55, 65) déposés de façon aléatoire et régénérés sensiblement sans fin, et un moins une couche (52, 62) de fibres courtes (14, 53, 63) d'origine biologique biodégradables, selon lequel une masse à filer (2) contenant de la cellulose est extrudée à travers des trous de buse d'au moins une buse de filage (3) pour créer des filaments (4) et ces filaments (4) sont étirés dans la direction d'extrusion, les filaments (4) étant déposés de façon aléatoire sur un dispositif de transport perforé (7) pour former un non-tissé filé (8) et des fibres courtes (14) étant ajoutées au non-tissé filé (8) pour former le non-tissé composite (1), caractérisé ce que les filaments (4) du non-tissé filé (8) sont exposés aux fibres courtes (14) en n'ayant encore jamais été séchés.

2. Procédé selon la revendication 1, **caractérisé en ce que** les filaments (4) du non-tissé filé (8) sont exposés à une suspension (15) de fibres courtes (14) en n'ayant encore jamais été séchés.

3. Procédé selon la revendication 2, **caractérisé en ce que** la suspension (15) comporte entre 0,01% en poids et 2,00% en poids de fibres courtes (14).

4. Procédé selon la revendication 2 ou 3, **caractérisé en ce que** les filaments (4) du non-tissé filé (8) sont exposés à la suspension (15) pendant un lavage (10).

5. Procédé selon une des revendications 2 à 14, **caractérisé en ce que** les filaments (4) du non-tissé filé (8) sont exposés à la suspension (15) pendant la formation du non-tissé filé (8).

6. Procédé selon une des revendications 1 à 5, **caractérisé en ce que** les filaments (4) du non-tissé filé (8) sont exposés à un flux d'air contenant les fibres courtes (14) en n'ayant encore jamais été séchés.

7. Procédé selon la revendication 6, **caractérisé en ce que** les filaments (4) sont exposés à un flux d'air d'étirement pour être étirés, et que les fibres courtes (14) sont ajoutées au flux d'air d'étirement pour exposer les filaments (4) du non-tissé filé (8) aux fibres courtes (14) en n'ayant encore jamais été séchés.

8. Procédé selon une des revendications précédentes, **caractérisé en ce qu'**après l'ajout de fibres courtes (14) aux filaments, le non-tissé composite (1) est soumis à au moins une étape de manipulation, laquelle étape de manipulation est sélectionnée parmi le groupe comprenant une consolidation par jet d'eau (16), un estampage par jet d'eau, une perforation par jet d'eau, un lavage (10) et un séchage (17).

9. Procédé selon une des revendications précédentes, **caractérisé en ce que** la masse à filer (2) est une solution de cellulose dans un solvant direct, en particulier un amine-oxyde tertiaire.

10. Procédé selon une des revendications précédentes, **caractérisé en ce que** les filaments (4) sont au moins partiellement coagulés après l'extrusion de l'au moins une buse de filage (3).

11. Procédé selon une des revendications précédentes, **caractérisé en ce que** les fibres courtes (14, 53, 63) sont des fibres courtes cellulosiques (14, 53, 63) et que le non-tissé composite (1) présente, lorsqu'il est parfaitement sec, une teneur en cellulose d'au moins 93% en poids, en particulier d'au moins 95% en poids, de préférence d'au moins 97% en poids.

12. Procédé selon une des revendications précédentes, **caractérisé en ce que** le non-tissé composite (1, 51, 61) comporte entre 10% en poids et 99% en poids, en particulier entre 15% en poids et 95% en poids, de préférence entre 20% en poids et 90% en poids de filaments cellulosiques (4, 55, 65) du non-tissé filé (8, 54, 64) et entre 1% en poids et 90% en poids, en particulier entre 5% en poids et 85% en poids, de préférence entre 10% en poids et 80% en poids de fibres courtes (14, 53, 63).

13. Procédé selon une des revendications précédentes, **caractérisé en ce que** le non-tissé composite (1, 51, 61) est sensiblement exempt de liants non naturellement présents dans le bois.

14. Procédé selon une des revendications précédentes, **caractérisé en ce que** les fibres courtes (14, 53, 63) sont sélectionnées parmi le groupe comprenant des fibres de cellulose naturelles, des fibres de cellulose, des fibres de viscose, de modal, de cupro et de lyocell, des fibres de cellulose modifiées chimiquement, des fibres cellulosiques recyclées et des fibres d'amidon.

15. Procédé selon une des revendications précédentes, **caractérisé en ce que** les fibres courtes (14, 53, 63) présentent une longueur de 0,5 mm à 15 mm, en particulier de 1 mm à 12 mm.

16. Appareil (200, 201) permettant de mettre en oeuvre un procédé selon une des revendications 1 à 15, comprenant un système de fabrication de masse à filer pour la fabrication d'une masse à filer cellulosique, au moins un appareil à non-tissé filé pour la fabrication d'un non-tissé filé cellulosique à partir de la masse à filer, lequel appareil à non-tissé filé comporte au moins une buse de filage (3) pour l'extrusion de la masse à filer (2) en filaments (4), au moins un système de coagulation (5) pour la coagulation au moins partielle des filaments (4) et un dispositif de transport (7) pour le stockage des filaments (4) et la formation du non-tissé filé (1), un système de lavage (10), éventuellement un système de consolidation par jet d'eau (16), un séchoir (17), éventuellement un équipement de crêpage et une enrouleuse (18), **caractérisé en ce que** l'équipement comprend un dispositif de dépôt par voie humide (13) ou un dispositif de dépôt par voie sèche (26) pour l'exposition du non-tissé filé cellulosique (1) à des fibres courtes (14), lequel dispositif de dépôt par voie humide (13) ou dispositif de dépôt par voie sèche (26) des fibres courtes (14) est prévu entre deux systèmes de fabrication de masse à filer et/ou devant, à l'intérieur et/ou à l'extrémité du système de lavage (10).
